# EUROPEAN PATENT SPECIFICATION

(11) **EP 3 451 527 B1**
(45) Date of publication and mention of the grant of the patent: **27.04.2022**
(21) Application number: 18191233.8
(22) Date of filing: 28.08.2018
(51) Int. Cl.: H02S 40/44, F24S 10/50, F24S 10/70, F24S 20/50

(54) **A METHOD FOR REALISING A THERMAL/PHOTOVOLTAIC SOLAR PANEL**
VERFAHREN ZUR HERSTELLUNG EINES THERMISCHEN/FOTOVOLTAISCHEN SOLARPANELS
PROCÉDÉ PERMETTANT DE METTRE EN OEUVRE UN PANNEAU SOLAIRE PHOTOVOLTAÏQUE/THERMIQUE

(30) Priority: 04.09.2017 IT 201700098782
(43) Date of publication of application: 06.03.2019
(73) Proprietor: Powertronic S.R.L., 37060 Sona (VR) (IT)
(72) Inventor: TONDELLONI, Daniele, 43029 TRAVERSETOLO (PARMA) (IT); RAMELLI, Andrea, 29010 ALSENO (PIACENZA) (IT)
(74) Representative: Monelli, Alberto

(56) References cited:
- EP-A1- 2 219 228
- EP-A1- 2 607 832
- WO-A1-01/01498
- DE-A1- 19 809 883
- JP-A- 2002 106 973
- US-A1- 2008 011 289
- US-A1- 2009 084 430
- US-A1- 2012 247 538

## Description

The object of the present invention is a method for realising a thermal/photovoltaic solar panel.

It can be used to produce electric energy and to produce hot water, typically for sanitary use. It is a hybrid panel where the photovoltaic solar panel absorbs the solar radiation and a heat exchanger enables the heat to be absorbed.

A thermal/photovoltaic solar panel is known that has a stratified structure that in turn comprises:
- an outer pane;
- a layer of photovoltaic cells glued to the outer pane and protected by the outer pane;
- a PVC insulating layer to which the layer of photovoltaic cells is glued;
- an aluminium roll bond that is heated by the rays of the sun and inside which a heat transfer fluid circulates. The PVC insulating layer is interposed between the layer of photovoltaic cells and the roll bond. It prevents the roll bond coming into electrical contact with the layer of photovoltaic cells damaging the panel.

The roll bond consists of two superimposed metal sheets that define, interposed between one another, a transit channel for the heat transfer fluid. It further comprises a connector for connecting a fluid inlet pipe and a connector for connecting a fluid outlet pipe. Both the connector of the inlet pipe and the connector of the outlet pipe protrude with the respect to the thickness of the roll bond.

Appropriately, the outer pane, the layer of photovoltaic cells and the PVC insulating layer are assembled together by hot rolling and interposition of intermediate layers of adhesive. They are also placed inside a common retaining frame. Subsequently, the roll bond is glued on the PVC insulating layer.

One drawback of this constructional solution is linked to the fact that the PVC layer also acts as a heat insulator, thus reducing panel performance.

In addition, the PVC layer performs an important action of containing a layer of adhesive that permits gluing thereof to the layer of photovoltaic cells. This layer of adhesive, during hot rolling, fluidifies at least partially, occupying small interstices and gaps obtained between one photovoltaic cell and the adjacent photovoltaic cells. In this manner, together with the compression action performed by the rolling means, enables the presence of air bubbles to be minimised to minimise the risk of condensation forming that could damage the electrical part of the cells.

WO01/01498 and EP2219228 disclose known solutions.

Accordingly, the object of the present invention is to propose a method for realising a thermal/photovoltaic solar panel that enables energy efficiency to be improved.

The technical task set and the objects specified are substantially attained by a method for realising a thermal/photovoltaic solar panel, comprising the technical characteristics as set out in one or more of the accompanying claims.

Additional features and advantages of the present invention will become more apparent from the approximate, and hence non-limiting, description of a method for realising a thermal/photovoltaic solar panel illustrated in the appended drawings, in which:
- figure 1 shows an exploded view of a panel according to the present invention;
- figures 2 and 4 show a plan view of a component of a panel according to the present invention in two different moments of the method according to the present invention;
- figure 3 shows a step of the method according to the present invention;
- figure 5 shows a side view of a panel obtained according to the method of the present invention;
- figure 6 shows a side view of a further panel obtained according to the method of the present invention.

The object of the present invention is a method for realising a thermal/photovoltaic solar panel 1. This enables photovoltaic electric energy to be produced and a heat transfer fluid to be heated by exploiting solar energy. In particular, it permits the simultaneous production of electric energy and the heating of a heat transfer fluid.

The method comprises the steps of realising a stratified assembly 2 comprising: a heat exchanger 21 for heating a heat transfer fluid, a layer 22 of photovoltaic cells and at least a first layer 23 of adhesive interposed between the exchanger 21 and the layer 22 of photovoltaic cells. This first layer 23 of adhesive is suitably in contact with both the layer 22 of photovoltaic cells and with the exchanger 21. The first adhesive layer 23 can comprise one or more sheets of gluing material (typically EVA). Advantageously, this gluing material fluidifies above a set temperature, gluing the parts with which it is in contact. Appropriately, this set temperature is greater than 60°C.

The exchanger 21 is advantageously a roll-bond. The roll bond 21 (well known as such) is a heat exchanger comprising two superimposed metal sheets that define, interposed between one another, a channel for the transit of the heat transfer fluid. Typically, the roll bond is made of aluminium.

Advantageously the step of realising the assembly 2 comprises the sub-step of applying a transparent plate 25 (preferably made of glass) to cover the layer 22 of photovoltaic cells. The transparent plate 25 can be applied by a second layer of 24 of adhesive. The layer 22 of photovoltaic cells thus remains interposed between the transparent plate 25 and the exchanger 21. The step of applying a transparent plate 25 can involve applying double or multiple glazing. In this case, the double or multiple glazing can comprise at least two transparent plates between which an air chamber is interposed. It enables heat to be dispersed outside, improving thermal efficiency.

Advantageously, the method comprises the step of applying a perimeter frame 26 to said assembly 2. The frame 26 reinforces the connection between the various parts of the assembly 2 and defines a barrier to the entry of dust and extraneous particles.

The method can further comprise the step of coating a portion of the exchanger 21 with a coating (advantageously Teflon or ceramic glaze-based coating). Appropriately, this occurs before the step of inserting the exchanger 21 into the assembly 2. The coating is advantageously applied to a face of the exchanger 21 intended to face the layer 22 of photovoltaic cells. In this manner, the coating acts as an electric insulator and also has an antiadhesive function. This minimises the risk of microcracks in the layer 22 of photovoltaic cells (these microcracks could compromise the operation thereof). In fact, the coating with antiadhesive properties permits the layer 22 of photovoltaic cells minimum shifts with respect to the exchanger 21. Possible heat expansion can thus be compensated without damaging the layer 22 of photovoltaic cells.

The method further comprises the step of hot compressing said assembly 2. This compression compresses layers of said stratified assembly against one another. The step of realising said assembly 2 occurs before the assembly is hot compressed. An example of such hot compression is thus hot rolling. Appropriately, the hot compressing step comprises/coincides with a hot rolling step. In particular, it comprises the step of making said assembly 2 transit between opposite rollers 9 that compress it. Appropriately, the rollers 9 are positioned in a furnace 90. The step of hot compressing said assembly comprises the step of heating said assembly 2 above 60°C. The step of hot compressing said assembly 2 comprises/determines the step of making the first layer 23 of adhesive melt which is distributed into gaps placed between the exchanger 21 and the layer 22 of photovoltaic cells (this occurs by positioning the assembly 2 in the furnace 90). Compression facilitates adhesion and minimises the risk that air bubbles can form (insulating thermally) in the first adhesive layer 23 (or in the second layer 24).

According to the invention, the exchanger 21 (being part of said assembly 2) during hot compression (or more in particular rolling) is devoid of a connector for the fluid inlet pipe and/or of a connector for the fluid outlet pipe. In fact, one or more of such connectors, by protruding beyond the thickness of the exchanger 21, would damage the rollers 9 during hot rolling.

According to the invention, the exchanger 21 comprises two opposite surfaces 211, 212. Each also comprises a lateral side 213 that extends in thickness and connects the two opposite surfaces 211, 212. Appropriately, the compression step compresses the two surfaces 211, 212 towards one another.

According to the invention, the method comprises the step of applying to said exchanger 21 a connector 4 for a fluid inlet pipe. This occurs after the step of hot compressing the assembly 2. Appropriately, this occurs by gluing or another method of welding. The connector 4 is applied to one of the two surfaces 211, 212. The step of applying the connector 4 to the exchanger 21 involves connecting the connector 4 to the hole non-removably. The connector 4 advantageously comprises a thread for screwing the fluid inlet pipe there. The connector 4 is an intermediate body interposed between the fluid inlet pipe and the exchanger 21. The fluid inlet pipe is connected to the connector 4 after the latter has been connected to the exchanger 21. According to the invention, after the step of hot compressing the assembly 2, but before the step of applying the connector 4 for the inlet pipe, the method comprises the step of making a hole on the exchanger 21. Said connector 4 for the inlet pipe is connected to this hole. In the course of this description, what is disclosed with reference to the connector 4 for the fluid inlet pipe can be repeated for the connector 8 for the outlet pipe. In this case, the connector 8 for the outlet pipe will fit in a corresponding hole (for which what has been disclosed with reference to the hole for applying the connector 4 for the inlet pipe can be repeated).

Advantageously, the step of making a hole on the exchanger 21 to apply the connector 4 for the inlet pipe comprises the step of piercing the exchanger 21. This can occur with a drill. In particular, shavings are removed. The step of piercing the exchanger 21 occurs after a channel 214 internal to the exchanger 21 intended for the transit of the fluid has been placed in excess pressure. Advantageously, this enables shavings or portions of the exchanger 21 to be prevented from entering and obstructing the channel 214. The step of placing in excess pressure the channel 214 could occur by blowing a fluid inside the channel 214 through an opening that can then be easily closed. This opening has smaller dimensions than the hole.

In one alternative solution, the step of making a hole on the exchanger 21 comprises the sub-step of tearing off a tongue 6 that is at least partly pre-cut onto the exchanger 21. For this purpose, the tongue 6 advantageously comprises a gripping ring.

Alternatively according to the invention, the method comprises, before the step of hot compressing said assembly 2, the steps of:
- making a hole on the exchanger 21;
- obstructing the hole on the exchanger 21 with a plug.

After the hot compressing step, the method comprises the steps of:
- removing the plug from said hole;
- applying to said hole a connector 4 for the inlet pipe.

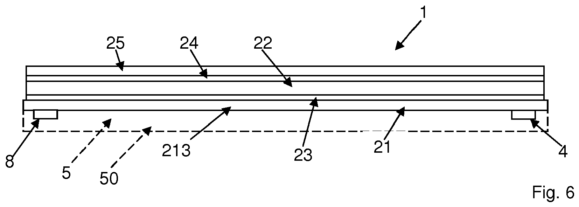

In a further constructional solution, during the hot compression step the connector 4 for the inlet pipe and/or the connector 8 for the outlet pipe are positioned in corresponding housings of a jig 5 (shown by dotted lines in figure 6) that transits together with the assembly 2 between the rollers 9. In this manner the connector 4 and/or the connector 8 do not cause a sudden increase in thickness that risks damaging the rollers 9. In fact, in this case, the assembly 2 will have a flat back 50 that can then be compressed (rolled). After compression (rolling) the jig 5 is removed.

In one alternative solution, during hot compression the assembly 2 comprises a portion 80 of a fluid inlet pipe that extends from said side 213 of the exchanger 21 and lies between two imaginary planes 210, 220 on which the two opposite surfaces 211, 212 of the exchanger 21 lie.

Similarly, the assembly 2 comprises a portion 90 of a fluid outlet pipe that extends from the side 213 of the exchanger and lies between the two planes 210, 220 indicated above. In this manner, portions 80, 90 of the inlet and outlet pipes remain interposed in the thickness of the two surfaces 211, 212 of the exchanger. Appropriately, the portion 80 and/or the portion 90 is/are welded to the exchanger 21.

In the preferred solution, during the step of hot compressing the assembly 2, the heat exchanger 21 comprises at least one blind inner conduit for the transit, during use, of a heat transfer fluid.

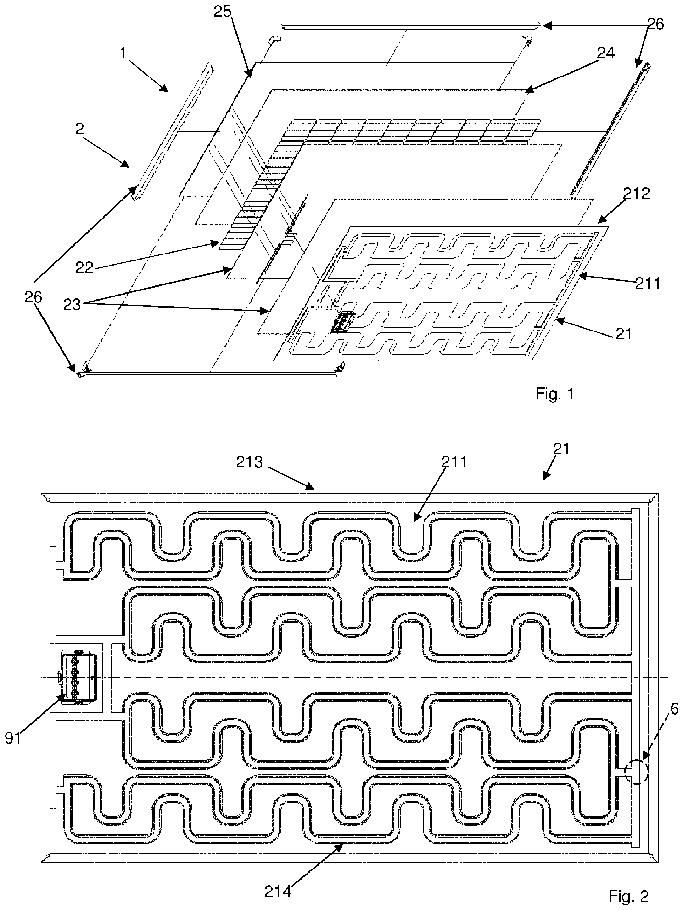

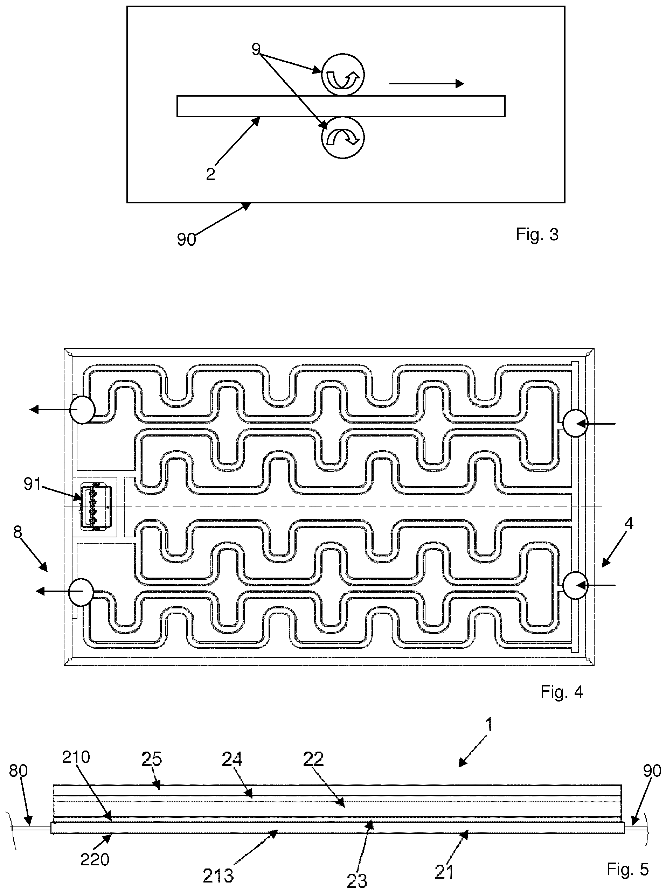

Appropriately, in figures 2 or 4 a casing 91 (known as a junction box) is shown that contains diodes to optimize the operation of the panel 1; in one alternative solution that is not illustrated it could be configured as a strip positioned at an edge of the exchanger 21.

The present invention offers important advantages.

First of all, it enables a method to be implemented that optimizes energy efficiency. This is achieved by eliminating a thick layer of PVC that reduces the amount of heat reaching the exchanger 21 (in the prior art this layer is required because it enables the layer of photovoltaic cells to be glued to a support). Further, optimisation of energy efficiency is obtained by minimising the risk of air bubbles forming inside the panel. This is obtained by compressing also the exchanger together with the remaining components of the assembly. In known solutions this is not possible because of the overall dimensions due to the connector of the inlet pipe and/or outlet pipe of the heat transfer fluid from the exchanger. In fact, such connectors protruding suddenly from the thickness of the exchanger would damage the rolling rollers that would strike and compress them. The invention as it is conceived is susceptible to numerous modifications and variants, all falling within the scope of the inventive concept characterising it. Further, all the details can be replaced with other technically-equivalent elements. In practice, all the materials used, as well as the dimensions, can be any according to requirements.

## Claims

1. A method for realising a thermal/photovoltaic solar panel (1) comprising the steps of:
- realising a stratified assembly (2) comprising: a heat exchanger (21) for heating a heat transfer fluid, a layer (22) of photovoltaic cells and at least a first layer (23) of adhesive interposed between the exchanger (21) and the layer (22) of photovoltaic cells; the exchanger (21) comprising two opposite surfaces (211, 212) and also a lateral side (213) that extends in thickness and connects the two opposite surfaces (211, 212);
- hot compressing said assembly (2); the step of hot compressing the assembly compresses layers of said stratified assembly against one another; the step of realising said stratified assembly (2) occurs before the assembly is hot compressed; the step of hot compressing said assembly (2) comprises/determines the step of making the first layer (23) of adhesive melt which is distributed into gaps placed between the heat exchanger (21) and the layer (22) of photovoltaic cells; the heat exchanger (21) during hot compression is devoid of a connector for the fluid inlet pipe after the step of hot compressing the assembly (2), the method comprises the step of applying to said exchanger (21) a connector (4) for a fluid inlet pipe;
**characterised in that** the connector (4) is applied to one of the two surfaces (211, 212) after the step of hot compressing the assembly (2), but before the step of applying the connector (4) for the inlet pipe, the method comprises the step of making a hole on the exchanger (21), said connector (4) for the inlet pipe being connected to the hole. Mule,

2. A method for realising a thermal/photovoltaic solar panel (1) comprising the steps of:
- realising a stratified assembly (2) comprising: a heat exchanger (21) for heating a heat transfer fluid, a layer (22) of photovoltaic cells and at least a first layer (23) of adhesive interposed between the exchanger (21) and the layer (22) of photovoltaic cells; the exchanger (21) comprising two opposite surfaces (211, 212) and also a lateral side (213) that extends in thickness and connects the two opposite surfaces (211, 212);
- hot compressing said assembly (2); the step of hot compressing the assembly compresses layers of said stratified assembly against one another; the step of realising said stratified assembly (2) occurs before the assembly is hot compressed; the step of hot compressing said assembly (2) comprises/ determines the step of making the first layer (23) of adhesive melt which is distributed into gaps placed between the heat exchanger (21) and the layer (22) of photovoltaic cells; the heat exchanger (21) during hot compression is devoid of a connector for the fluid inlet pipe;
after the step of hot compressing the assembly (2), the method comprises the step of applying to said exchanger (21) a connector (4) for a fluid inlet pipe;
**characterised in that** the connector (4) is applied to one of the two surfaces (211, 212) before the step of hot compressing said assembly (2), the method comprises the steps of:
- making a hole on the heat exchanger (21);
- obstructing the hole on the heat exchanger (21) with a plug;
after the hot compressing step, the method comprises the steps of:
- removing the plug from said hole;
- applying to said hole the connector (4) for the inlet pipe.

3. The method according to claims 1 or 2 , **characterised in that** the step of hot compressing said assembly (2) comprises the step of making said assembly (2) transit between two rollers (9) that compress it; the heat exchanger (21) being part of said assembly (2), during the hot compressing step being free from a connector for the fluid inlet pipe and a connector for the fluid outlet pipe.

4. The method according to any one of the preceding claims, **characterised in that**, after said connector (4) for a fluid inlet pipe is applied to said heat exchanger (21) said connector (4) is applied to the fluid inlet pipe.

5. The method according to any one of the preceding claims, **characterised in that** the step of applying the connector (4) to the exchanger (21) envisaging non-removably connecting the connector (4) to said hole.

6. The method according to claim 5 when depending on claim 1, **characterised in that** the step of making a hole on the exchanger (21) for the application of said connector (4) for the inlet pipe comprises the step of piercing the exchanger (21) for removing shavings after placing in excess pressure a channel (214) internal to the exchanger (21) intended for the transit of fluid.

7. The method according to claim 5 when depending on claim 1, or claim 6, **characterised in that** the step of making a hole on the exchanger (21) comprises the sub-step of tearing off a tongue (6) at least partly pre-cut onto the exchanger (21).

8. The method according to any of the previous claim, **characterised in that** it comprises the step of applying a perimeter frame (26) to said assembly (2).

## Patentansprüche

1. Verfahren zur Herstellung eines thermischen/photovoltaischen Solarpaneels (1), umfassend die Schritte:
- Herstellen einer geschichteten Anordnung (2), umfassend: einen Wärmeaustauscher (21) zum Erwärmen eines Wärmeübertragungsfluids, eine Schicht (22) aus photovoltaischen Zellen und mindestens eine erste Klebstoffschicht (23), die zwischen dem Austauscher (21) und der Schicht (22) aus photovoltaischen Zellen angeordnet ist; wobei der Austauscher (21) zwei gegenüberliegende Oberflächen (211, 212) und auch eine laterale Seite (213) umfasst, die sich in der Dicke erstreckt und die zwei gegenüberliegenden Oberflächen (211, 212) verbindet;
- Heißkomprimieren der Anordnung (2); der Schritt zum Heißkomprimieren der Anordnung komprimiert Schichten der geschichteten Anordnung gegeneinander; der Schritt zum Herstellen der geschichteten Anordnung (2) erfolgt, bevor die Anordnung heiß komprimiert wird; der Schritt zum Heißkomprimieren der Anordnung (2) umfasst/bestimmt den Schritt zum Schmelzen bringen der ersten Klebstoffschicht (23), die in Spalten verteilt ist, die zwischen dem Wärmeaustauscher (21) und der Schicht (22) aus photovoltaischen Zellen angeordnet sind; der Wärmeaustauscher (21) während des Heißkomprimierens ist nach dem Schritt zum Heißkomprimieren der Anordnung (2) ohne einen Verbinder für das Fluideinlassrohr, das Verfahren umfasst den Schritt zum Anbringen eines Verbinders (4) für ein Fluideinlassrohr auf den Austauscher (21);
**dadurch gekennzeichnet, dass** der Verbinder (4) auf eine der beiden Oberflächen (211, 212) nach dem Schritt zum Heißkomprimieren der Anordnung (2) angebracht wird, jedoch vor dem Schritt zum Anbringen des Verbinders (4) für das Einlassrohr umfasst das Verfahren den Schritt zum Bilden eines Lochs auf dem Austauscher (21), wobei der Verbinder (4) für das Einlassrohr mit dem Loch verbunden ist.

2. Verfahren zur Herstellung eines thermischen/photovoltaischen Solarpaneels (1), umfassend die Schritte:
- Herstellen einer geschichteten Anordnung (2), umfassend: einen Wärmeaustauscher (21) zum Erwärmen eines Wärmeübertragungsfluids, eine Schicht (22) aus photovoltaischen Zellen und mindestens eine erste Klebstoffschicht (23), die zwischen dem Austauscher (21) und der Schicht (22) aus photovoltaischen Zellen angeordnet ist; wobei der Austauscher (21) zwei gegenüberliegende Oberflächen (211, 212) und auch eine laterale Seite (213) umfasst, die sich in der Dicke erstreckt und die zwei gegenüberliegenden Oberflächen (211, 212) verbindet;
- Heißkomprimieren der Anordnung (2); der Schritt zum Heißkomprimieren der Anordnung komprimiert Schichten der geschichteten Anordnung gegeneinander; der Schritt zum Herstellen der geschichteten Anordnung (2) erfolgt, bevor die Anordnung heiß komprimiert wird; der Schritt zum Heißkomprimieren der Anordnung (2) umfasst/bestimmt den Schritt zum Schmelzen bringen der ersten Klebstoffschicht (23), die in Spalten verteilt ist, die zwischen dem Wärmeaustauscher (21) und der Schicht (22) aus photovoltaischen Zellen angeordnet sind; der Wärmeaustauscher (21) während des Heißkomprimierens ist ohne einen Verbinder für das Fluideinlassrohr;
nach dem Schritt zum Heißkomprimieren der Anordnung (2) umfasst das Verfahren den Schritt zum Anbringen eines Verbinders (4) für ein Fluideinlassrohr auf den Austauscher (21);
**dadurch gekennzeichnet, dass** der Verbinder (4) vor dem Schritt zum Heißkomprimieren der Anordnung (2) auf eine der beiden Oberflächen (211, 212) angebracht wird, wobei das Verfahren die folgenden Schritte umfasst:
- Bilden eines Lochs am Wärmeaustauscher (21);
- Verstopfen des Lochs am Wärmeaustauscher (21) mit einem Stopfen;
nach dem Heißkomprimierungsschritt umfasst das Verfahren die folgenden Schritte:
- Entfernen des Stopfens aus dem Loch;
- Anbringen des Verbinders (4) für das Einlassrohr auf das Loch.

3. Verfahren nach Anspruch 1 oder 2, **dadurch gekennzeichnet, dass** der Schritt zum Heißkomprimieren der Anordnung (2) den Schritt zum Führen der Anordnung (2) zwischen zwei Walzen (9), die sie komprimieren, umfasst; wobei der Wärmeaustauscher (21) Teil der Anordnung (2) ist und während des Heißkomprimierungsschritts ohne einen Verbinder für das Fluideinlassrohr und einen Verbinder für das Fluidauslassrohr ist.

4. Verfahren nach einem der vorhergehenden Ansprüche, **dadurch gekennzeichnet, dass** nach dem Anbringen des Verbinders (4) für ein Fluideinlassrohr auf den Wärmeaustauscher (21) der Verbinder (4) auf das Fluideinlassrohr angebracht wird.

5. Verfahren nach einem der vorhergehenden Ansprüche, **dadurch gekennzeichnet, dass** der Schritt zum Anbringen des Verbinders (4) auf den Austauscher (21) vorsieht, dass der Verbinder (4) nicht entfernbar mit dem Loch verbunden wird.

6. Verfahren nach Anspruch 5, wenn abhängig von Anspruch 1, **dadurch gekennzeichnet, dass** der Schritt zum Bilden eines Lochs am Austauscher (21) zum Anbringen des Verbinders (4) für das Einlassrohr den Schritt zum Durchstechen des Austauschers (21) zum Entfernen von Spänen umfasst, nachdem ein Kanal (214) innen am Austauscher (21), der für den Durchgang von Fluid bestimmt ist, unter Überdruck gesetzt worden ist.

7. Verfahren nach Anspruch 5, wenn abhängig von Anspruch 1 oder Anspruch 6, **dadurch gekennzeichnet, dass** der Schritt zum Bilden eines Lochs auf dem Austauscher (21) den Unterschritt zum Abreißen einer Lasche (6) umfasst, die zumindest teilweise auf den Austauscher (21) vorgeschnitten ist.

8. Verfahren nach einem der vorhergehenden Ansprüche, **dadurch gekennzeichnet, dass** es den Schritt zum Anbringen eines Umfangsrahmens (26) auf die Anordnung (2) umfasst.

## Revendications

1. Procédé de réalisation d'un panneau solaire thermique/photovoltaïque (1), comprenant les étapes de :
- réaliser un assemblage stratifié (2), comprenant : un échangeur de chaleur (21) servant à chauffer un fluide de transfert de chaleur, une couche (22) de cellules photovoltaïques et au moins une première couche (23) d'adhésif interposée entre l'échangeur (21) et la couche (22) de cellules photovoltaïques ; l'échangeur (21) comprenant deux surfaces opposées (211, 212) et également un côté latéral (213) se prolongeant en épaisseur et reliant les deux surfaces opposées (211, 212) ;
- comprimer à chaud ledit assemblage (2) ; l'étape de compression à chaud de l'assemblage comprime les couches dudit assemblage stratifié les unes contre les autres ; l'étape de réalisation dudit assemblage stratifié (2) se produit avant que l'assemblage ne soit comprimé à chaud ; l'étape de compression à chaud dudit assemblage (2) comprend/détermine l'étape de faire fondre la première couche (23) d'adhésif qui est distribuée dans des espaces placés entre l'échangeur de chaleur (21) et la couche (22) de cellules photovoltaïques ; l'échangeur de chaleur (21), pendant la compression à chaud, est dépourvu d'un connecteur pour le tuyau d'entrée de fluide après l'étape de compression à chaud de l'assemblage (2), le procédé comprend l'étape consistant à appliquer audit échangeur (21) un connecteur (4) pour un tuyau d'entrée de fluide ;
**caractérisé en ce que** le connecteur (4) est appliqué sur l'une des deux surfaces (211, 212) après l'étape de compression à chaud de l'assemblage (2), mais avant l'étape d'application du connecteur (4) au tuyau d'entrée, le procédé comprend l'étape consistant à réaliser un trou sur l'échangeur (21), ledit connecteur (4) pour le tuyau d'entrée étant connecté au trou.

2. Procédé de réalisation d'un panneau solaire thermique/photovoltaïque (1), comprenant les étapes de :
- réaliser un assemblage stratifié (2), comprenant : un échangeur de chaleur (21) servant à chauffer un fluide de transfert de chaleur, une couche (22) de cellules photovoltaïques et au moins une première couche (23) d'adhésif interposée entre l'échangeur (21) et la couche (22) de cellules photovoltaïques ; l'échangeur (21) comprenant deux surfaces opposées (211, 212) et également un côté latéral (213) se prolongeant en épaisseur et reliant les deux surfaces opposées (211, 212) ;
- comprimer à chaud ledit assemblage (2) ; l'étape de compression à chaud de l'assemblage comprime les couches dudit assemblage stratifié les unes contre les autres ; l'étape de réalisation dudit assemblage stratifié (2) se produit avant que l'assemblage ne soit comprimé à chaud ; l'étape de compression à chaud dudit assemblage (2) comprend/détermine l'étape de faire fondre la première couche (23) d'adhésif qui est distribuée dans des espaces placés entre l'échangeur de chaleur (21) et la couche (22) de cellules photovoltaïques ; l'échangeur de chaleur (21), pendant la compression à chaud, est dépourvu d'un connecteur pour le tuyau d'entrée de fluide ;
après l'étape de compression à chaud de l'assemblage (2), le procédé comprend l'étape consistant à appliquer audit échangeur (21) un connecteur (4) pour un tuyau d'entrée de fluide ;
**caractérisé en ce que** le connecteur (4) est appliqué sur l'une des deux surfaces (211, 212) avant l'étape de compression à chaud dudit assemblage (2), le procédé comprend les étapes de :
- réaliser un trou sur l'échangeur de chaleur (21) ;
- obstruer le trou sur l'échangeur de chaleur (21) avec un bouchon ;
après l'étape de compression à chaud, le procédé comprend les étapes de :
- retirer le bouchon dudit trou ;
- appliquer sur ledit trou le connecteur (4) pour le tuyau d'entrée.

3. Procédé selon la revendication 1 ou 2, **caractérisé en ce que** l'étape de compression à chaud dudit assemblage (2) comprend l'étape consistant à faire transiter ledit assemblage (2) entre deux rouleaux (9) qui le compriment ; l'échangeur de chaleur (21) faisant partie dudit assemblage (2), pendant l'étape de compression à chaud, étant exempt d'un connecteur pour le tuyau d'entrée de fluide et d'un connecteur pour le tuyau de sortie de fluide.

4. Procédé selon l'une quelconque des revendications précédentes, **caractérisé en ce que**, après que ledit connecteur (4) pour un tuyau d'entrée de fluide soit appliqué audit échangeur de chaleur (21), ledit connecteur (4) est appliqué au tuyau d'entrée de fluide.

5. Procédé selon l'une quelconque des revendications précédentes, **caractérisé en ce que** l'étape d'application du connecteur (4) sur l'échangeur (21) prévoit de connecter de manière inamovible le connecteur (4) audit trou.

6. Procédé selon la revendication 5 lorsqu'elle dépend de la revendication 1, **caractérisé en ce que** l'étape de réalisation d'un trou sur l'échangeur (21) pour l'application dudit connecteur (4) pour le tuyau d'entrée comprend l'étape consistant à percer l'échangeur (21) pour retirer des copeaux après avoir placé en surpression un canal (214) interne à l'échangeur (21) prévu pour le transit du fluide.

7. Procédé selon la revendication 5 lorsqu'elle dépend de la revendication 1 ou de la revendication 6, **caractérisé en ce que** l'étape de réalisation d'un trou sur l'échangeur (21) comprend la sous-étape consistant à déchirer une languette (6) au moins partiellement prédécoupée sur l'échangeur (21).

8. Procédé selon l'une quelconque des revendications précédentes, **caractérisé en ce qu'**il comprend l'étape consistant à appliquer un cadre périphérique (26) audit assemblage (2).
